# EUROPEAN PATENT APPLICATION

(11) **EP 2 682 289 A2**
(43) Date of publication of application: **08.01.2014**
(21) Application number: 11855238.9
(22) Date of filing: 23.12.2011
(51) Int. Cl.: B60C 23/02, B60C 23/00

(54) **SYSTEM AND METHOD FOR TRACKING TIRE POSITIONS**

(30) Priority: 04.01.2011 KR 20110000628
(71) Applicant: Continental Automotive GmbH, 30165 Hannover (DE)
(72) Inventor: LEE, Bok Hee, Cheongju-si Chungcheongbuk-do 360-708 (KR)
(86) International application number: PCT/KR2011/010031
(87) International publication number: WO 2012/093792

(57) **Abstract**

The present invention relates to a system and method for tracking tire positions. The present invention performs tracking of tires by checking the position of tires synchronized at a predetermined angle when a vehicle speed is equal to or greater than a preset reference speed, on the basis of wheel phase information of a wheel sensor, which is provided at the predetermined angle at every first predetermined time interval through RF communication, and wheel speed information of a wheel speed sensor including tire phase information which is inputted at a second predetermined time interval through a CAN communication line.

## Description

The present invention relates to a system and method for tracking tire positions. To be specific, the system and method can track tire positions accurately on the basis of wheel phase information provided by the wheel sensor and wheel speed information provided by the wheel speed sensor.

The prior tire pressure monitoring system in a vehicle could determine whether the tire pressure falls under a predetermined level, and has been developed into a tire pressure tracking device which can automatically track and report tire positions.

In the conventional tire pressure monitoring system based on automatic tracking of tire positions, the tire tracking device in a vehicle transmits signals to drive low frequency initiators (LFIs) mounted near each wheel.

For example, of three of four tires, one LFI is mounted on the front left (FL) tire, the front right (FR) tire, and the rear right (RR) tire, respectively. The tire tracking device transmits signals to drive the LFIs in the sequence of FL -> FR -> RR.

Here, the LFIs transmit radio signals to wheel sensors mounted on corresponding tires to request them to track tire positions.

Then, in response to such a request, wheel sensors transmit detected tire position change data in wireless mode to the tire monitoring device. The tire monitoring system then analyzes the wheel sensor ID and tire position change data provided by wheel sensors to form position information of each tire.

The combination of multiple LFIs and the tire monitoring device can automatically track tire positions and notify a driver of tire position information, as shown in related examples disclosed in the US patent No. 6,112,587.

However, the prior art requires multiple LFIs, which increases vehicle weight and wiring complexity. Therefore, when a tire pressure monitoring system is built on the basis of automatic tire position tracking, it takes extra costs and impedes improvement of fuel economy.

### Problem to Be Solved

To solve the aforesaid problem, the present invention is proposed. On the basis of wheel phase information provided by a wheel sensor at a predetermined angle, and wheel speed information and phase information provided by the said wheel sensor at a predetermined time interval, the system and method for tracking tire positions can track tire positions and notifies a driver of them in a simple, accurate, and cost-effective way.

### Solution to the Problem

To achieve the above-mentioned purpose, the present invention proposes a system for tracking tire positions, which is characterized in that, the said system comprises:
a wheel sensor which is mounted in a specific position on a tire and generates wheel phase information of the tires at a predetermined angle every first predetermined time interval,
an RF communication unit which transmits the said wheel phase information of the tires,
a wheel speed sensor which is mounted in a specific position on a tire and
generates wheel speed information including tire phase information every second predetermined time interval

A tire position tracking device which
determines whether the conditions for tracking tire positions are met on the basis of wheel speed information provided by the said wheel speed sensor, and
if the conditions are met, tracks tire positions on the basis of the
said wheel phase information and tire phase information.

The said tire position tracking device comprises:
a unit which judges whether tire position tracking conditions are met based on
the wheel speed information
a unit for receiving the wheel phase information from the said wheel sensor
at a predetermined angle every first predetermined time interval
a unit for receiving wheel speed information, including tire phase information, which is provided by the wheel speed sensor
every second predetermined time interval
a tire position tracking unit which determines tire positions synchronized at the said predetermined angle
on the basis of the wheel phase information provided by the wheel phase information receiving unit and the tire phase
information provided by the wheel speed information receiving unit,
and then accumulates the number of times of tire position tracking, and
a unit for terminating tracking of tire positions when the accumulated number of times of tire position tracking
reaches a predetermined value

If the wheel speed received by the unit for judging tire position tracking conditions
exceeds a preset reference speed,
the unit shall determine that the conditions for tracking tire positions are met.

It is preferable that the preset reference speed is 25 km/h, the first predetermined time interval is 16 seconds, and the second predetermined time interval is 20 ms.

The wheel speed information is preferably provided for the tire position tracking device through a CAN communication line.

The predetermined value is 10.

In addition, to achieve the above-mentioned purpose, the present invention also provides a method for tracking tire positions, which is characterized in that the method involves the following stages:
the stage at which wheel phase information provided by the wheel sensor at a predetermined angle every first predetermined time interval is received in the tire position tracking device;
the stage at which wheel speed information, including tire phase information, which is provided by the wheel speed sensor every second predetermined time interval is received;
the stage at which the number of times of tire position tracking is accumulated after the tire position information is synchronized at a predetermined angle based on the tire phase information and wheel phase information; and
the stage at which tracking of tire positions is terminated when the accumulated number of times of tire position tracking reaches the predetermined value after comparison.

Here, the method also involves
the stage at which the conditions for tracking tire positions are determined to be met when the wheel speed provided by the wheel speed sensor mounted in a specific vehicle position exceeds the preset reference speed.

Meanwhile, the wheel phase information
is preferably provided for the tire position tracking device through RF communication, and
the wheel speed information is preferably provided for the tire position tracking device through a CAN communication line.

### Effect of the Invention

According to the foregoing description, the system and method for tracking tire positions described in the present invention has achieved the following effect: it performs tracking of tires by checking the tire positions synchronized at a predetermined angle, on the basis of wheel phase information of a wheel sensor, which is provided at the predetermined angle every first predetermined time interval through RF communication, and wheel speed information, including tire phase information, which is provided by a wheel speed sensor every second predetermined time interval through a CAN communication line; moreover, when the accumulated number of times of tire position tracking reaches a predetermined value, it terminates tracking of tire positions. Without the need for LFIs, the present invention minimizes the cost of building the automatic tire position tracking system, simplifies wiring and manufacturing process, and reduces manufacturing cost.

### Brief Description of the Drawings

The drawings attached to the specifications aim to illustrate the preferred embodiments of the present invention, and help explain technical ideas of the invention together with detailed description of the invention. However, it should be understood that the scope of the present invention is not limited to the situations illustrated by such drawings.
Fig. 1 shows the structure of the tire position tracking system described in the embodiment of the invention.
Fig. 2 shows details of the tire position tracking unit illustrated in Fig. 1.
Fig. 3 shows the process of tire position tracking described in another embodiment of the invention.

### Preferred Embodiments of the Invention

To fully understand the purpose to be achieved by the implementation of the present invention and the benefits of the present invention, you should refer to the information contained in the drawings and the accompanying drawings which illustrate a preferred embodiment of the present invention.

A detailed description of the preferred embodiment of the present invention is given below with reference to the accompanying drawings. The same reference number represents the same part in a drawing.

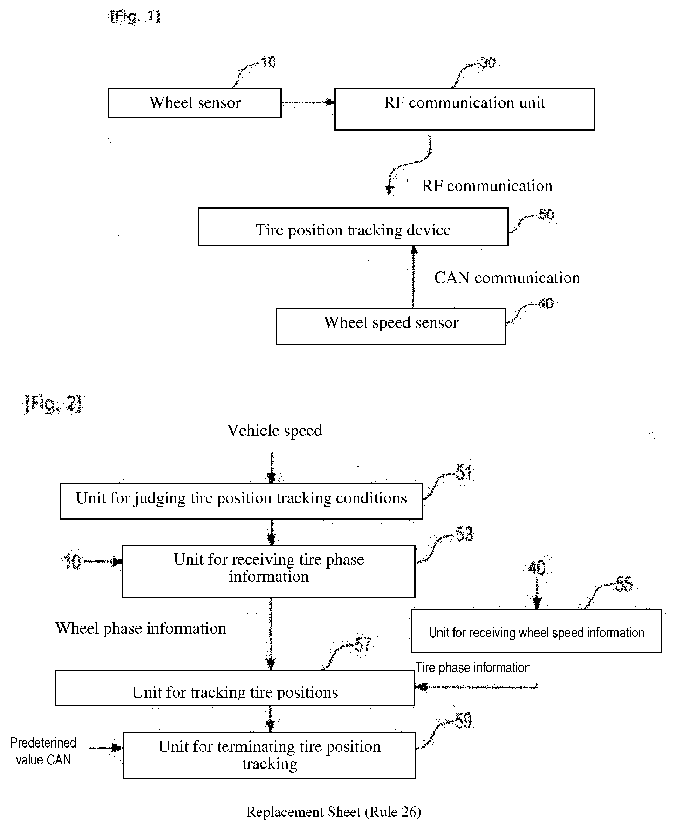

Fig. 1 shows the structure of the tire position tracking system described in the embodiment of the present invention, and Fig. 2 shows details of the tire position tracking unit illustrated in Fig. 1. As shown in Fig. 2, the tire position tracking system related to the present invention checks the tire positions synchronized at a predetermined angle, on the basis of wheel phase information provided by the wheel sensor at the predetermined angle every first predetermined time interval through RF communication, and wheel speed information, including tire phase information, which is provided by the wheel speed sensor every second predetermined time interval through a CAN communication line. Moreover, it terminates tracking of tire positions when the accumulated number of times of tire position tracking reaches a predetermined value. This system comprises a wheel sensor (10), an RF communication unit (30), a wheel speed sensor (40), and a tire position tracking device (50).

The wheel sensor (10) is mounted in a specific position on a tire and transmits wheel phase information at a predetermined angle (0°) every first predetermined time interval (16s).

Here, the wheel phase information is transmitted every first predetermined time interval (16s) through the RF communication unit (30). Data transfer of the RF communication unit (30) in compliance with communication protocols is a technology well-known to ordinary technicians, so the details about the RF communication unit are omitted here.

In addition, the wheel speed sensor (40) transmits wheel speed information to the tire position tracking device (50) every second predetermined time interval (20 ms) through a CAN communication line.

As shown in Fig. 2, the tire position tracking device (50) includes a unit (51) which judges whether tire position tracking conditions are met; in other words, when the vehicle speed provided by a wheel speed sensor (not shown in the figure) mounted in a specific position is equal to or greater than a preset reference speed, it is deemed that tire position tracking conditions are met.

The tire position tracking device (50) comprises a unit (53) for receiving the wheel phase information from the wheel sensor (10) at a predetermined angle (0°) every first predetermined time interval a unit (55) for receiving wheel speed information, including tire phase information, which is provided by the wheel speed sensor (40) every second predetermined time interval, a tire position tracking unit (57) which determines tire positions synchronized at the predetermined angle on the basis of the wheel phase information and tire phase information, and then accumulates the number of times of tire position tracking, and a unit (59) for terminating tracking of tire positions when the accumulated number of times reaches a predetermined value, for example, (10).

The preset reference speed, first predetermined time interval, predetermined angle, second predetermined time interval, and predetermined value are result values obtained from multiple experiments. They are usually preset and saved by the manufacturer in the system so that the system can track tire positions.

Here, the tire position tracking device (50) as described in the preferred embodiment is different from a tire pressure monitoring system (TPMS); however, it is apparent to those ordinary technicians that they can be integrated.

According to the structure, the tire position tracking system checks the tire positions synchronized at the predetermined angle, on the basis of wheel phase information provided by the wheel sensor at the predetermined angle every first predetermined time interval through RF communication, and tire phase information provided every second predetermined time interval through a CAN communication line. Moreover, the system terminates tracking of tire positions when the accumulated number of times of tire position tracking reaches a predetermined value.

According to the preferred embodiment of the present invention, the system can track tire positions without any LFIs. Therefore, the system minimizes the cost for building the automatic tire position tracking system, simplifies wiring and manufacturing process, and reduces manufacturing cost.

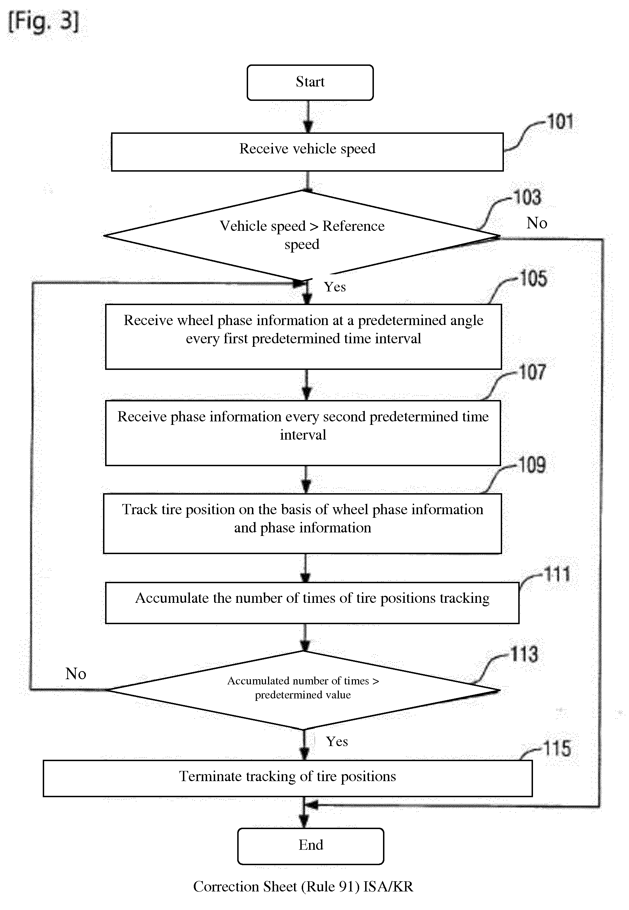

Fig. 3 shows the process of tire position tracking performed by the units described in Fig. 1. A description of the process is given below with reference to Fig. 3.

First, the tire position tracking device (50) receives the transmitted vehicle speed (stage 101), and compares the received vehicle speed with a preset reference speed (stage 103). When the received vehicle speed exceeds the preset reference speed, it will be regarded that the conditions for tracking tire positions are met, and the device begins to track tire positions.

In other words, at stage (105), the tire position tracking device (50) receives wheel phase information provided by the wheel sensor (10) at the predetermined angle every first predetermined time interval through RF communication (13); at stage (107), the device (50) receives the wheel speed information, including tire phase information, which is provided by the wheel speed sensor (40) every second predetermined time interval.

Then, at stage (109), the tire position tracking device (50) checks the tire positions synchronized at the predetermined angle on the basis of the tire phase information and wheel phase information, and at stage (111), accumulates the number of times of tire position tracking.

Then, at stage (113), the tire position tracking device (50) compares the accumulated number of times of tire position tracking at stage (111) with a predetermined value, and terminates position tracking (stage 115) and exits the program if the accumulated number of times reaches the predetermined value (10).

Meanwhile, when the vehicle speed exceeds the preset reference speed, the tire position tracking system checks the tire positions synchronized at the predetermined angle, on the basis of wheel phase information provided the wheel sensor at the predetermined angle every first predetermined time interval through RF communication, and wheel speed information, including tire phase information, which is provided every second predetermined time interval through a CAN communication line, and accumulates the number of times of tire position tracking, and terminates tracking of tire positions when the accumulated number of times reaches the predetermined value.

According to the preferred embodiment of the present invention, the system can track tire positions without any LFIs. Therefore, the system minimizes the cost of building the automatic tire position tracking system, simplifies wiring and manufacturing process, and reduces manufacturing cost.

Although the present invention has been fully described with reference to the preferred embodiment, the present invention is not limited to the aforementioned embodiment only. It should be understood that various changes and modifications can be made by those skilled in the art without departing from the scope and technical ideas of the invention defined in the appended claims.

### Industrial Applicability

When the vehicle speed exceeds the preset reference speed, the tire position tracking system checks the tire positions synchronized at the predetermined angle, on the basis of wheel phase information provided by the wheel sensor at the predetermined angle every first predetermined time interval through RF communication, and wheel speed information, including tire phase information, which is provided every second predetermined time interval through a CAN communication line, and accumulates the number of times of tire position tracking, and terminates tracking of tire positions when the accumulated number of times reaches the predetermined value. Therefore, the system can track tire positions without any LFIs. As a result, the system minimizes the cost for building the automatic tire position tracking system, simplifies wiring and manufacturing process, and reduces manufacturing cost. The tire position tracking system greatly improves tracking accuracy, reliability, performance, and efficiency, and is fully feasible to install on vehicles and put on the market. It can be widely applied in the industry.

## Claims

1. A tire position tracking system comprising a wheel sensor which is mounted in a specific position on a tire and generates wheel phase information of tires at a predetermined angle every first predetermined time interval, an RF communication unit which transmits wheel phase information of tires, a wheel speed sensor which is mounted in a specific position on a tire and generates wheel speed information including tire phase information every second predetermined time interval, and a tire position tracking device which determines whether conditions for tracking tire positions are met on the basis of wheel speed information provided by the wheel sensor, and if the conditions are met, tracks tire positions on the basis of the wheel phase information and tire phase information.

2. The tire position tracking system as claimed in claim 1, **characterized in that**, the tire position tracking device comprises the following units:
a unit which judges whether tire position tracking conditions are met based on the wheel speed information
a unit for receiving the wheel phase information from the wheel sensor at a predetermined angle every first predetermined time interval
a unit for receiving wheel speed information, including tire phase information, which is provided by the wheel speed sensor every second predetermined time interval;
a tire position tracking unit which determines tire positions synchronized at the predetermined angle on the basis of the wheel phase information provided by the wheel phase information receiving unit, and the tire phase information provided by the wheel speed information receiving unit, and
then accumulates the number of times of tire position tracking;a unit for terminating tracking of tire positions when the accumulated number of times of tire position tracking reaches a predetermined value.

3. The tire position tracking system as claimed in claim 2, **characterized in that**, the part for judging tire position tracking conditions determines that the tracking conditions are met when the received vehicle speed exceeds the preset reference speed.

4. The tire position tracking system as claimed in claim 3, **characterized in that**, the preset reference speed is 25 km/h.

5. The tire position tracking system as claimed in claim 4, **characterized in that**,
the first predetermined time interval is 16 seconds.

6. The tire position tracking system as claimed in claim 5, **characterized in that**, the second predetermined time interval is 20 ms.

7. The tire position tracking system as claimed in claim 6, **characterized in that**, the wheel speed information is provided for the tire position tracking device through a CAN communication line.

8. The tire position tracking system as claimed in claim 7, **characterized in that**, the predetermined value is 10.

9. The method for tracking tire positions used in the tire position tracking device, **characterized in that**, the following stages are involved: a stage at which wheel phase information provided by the wheel sensor at a predetermined angle every first predetermined time interval is received;
a stage at which wheel speed information, including tire phase information, which is provided by the wheel speed sensor every second predetermined time interval is received; a stage at which the number of times of tire position tracking is accumulated after the tire position information is synchronized at a predetermined angle based on the tire phase information and wheel phase information; and
a stage at which tracking of tire positions is terminated when the accumulated number of times of tire position tracking reaches the predetermined value after comparison.

10. The method for tracking tire positions as claimed in claim 9, **characterized in that**, the following stage is also involved: a stage at which conditions for tracking tire positions are determined to be met when the wheel speed provided by the wheel speed sensor mounted in a specific vehicle position exceeds the preset reference speed.

11. The method for tracking tire positions as claimed in claim 10, **characterized in that**, the wheel phase information is provided for the tire position tracking device through RF communication.

12. The method for tracking tire positions as claimed in claim 11, **characterized in that**, the wheel speed information is provided for the tire position tracking device through a CAN communication line.
